# EUROPEAN PATENT APPLICATION

(11) **EP 2 610 800 A1**
(43) Date of publication of application: **03.07.2013**
(21) Application number: 12005815.1
(22) Date of filing: 10.08.2012
(51) Int. Cl.: G06Q 20/32

(54) **Multi-party transactions with static and/or dynamic rules management mediated by one ore more NFC-enabled devices**

(30) Priority: 28.12.2011 US 201113338618
(71) Applicant: Broadcom Corporation, Irvine, CA 92617 (US)
(72) Inventor: Nahidipour, Aram, Laguna Niguel, CA 92677 (US)
(74) Representative: Jehle, Volker Armin

(57) **Abstract**

Virtual money, in electronic form, with dynamically programmable characteristics other than value for controlling the pay out and use of the stored value are provided. A computational platform, such as but not limited to an NFC-enabled mobile device, can receive and distribute virtual money in accordance with the rules and constraints supplied by the issuer of the value stored in the NFC-enabled mobile device. The rules and constraints can be dynamically changed by the issuer prior to the payout from the NFC-enabled mobile device. Pay outs from the NFC-enabled mobile device further include rules that constrain or define the use of the paid out value.

## Description

### Field of the Invention

The present disclosure relates generally to Near Field Communication (NFC) devices and the operation and application thereof. More particularly, the present disclosure relates to multi-party transactions with static and/or dynamic rules management mediated by one or more NFC-enabled devices.

### Background

Advances in semiconductor manufacturing technologies have resulted in dramatically increased circuit packing densities and higher speeds of operation. In turn, these advances have provided designers with the ability to produce many processor and communication functions that were not previously practical. In some instances these functions are combined in a single, highly integrated device. In other instances these functions are partitioned into two or more devices or chips.

Advances in digital systems architecture, in combination with the advances in the speed and density of semiconductors, have resulted in the availability of substantial computing power and digital communications networks for relatively low cost. In turn, this has led to a vast installed base of computers and other computational platforms, each with the ability to communicate with others.

Given the very large installed base of computational platforms, which includes at least personal computers and smartphones, it is not surprising that new operational paradigms for computational devices have been developed. It is noted that early computational platforms and communication networks served the military/industrial/commercial application space, whereas the vast increases in computational and communication capacities and concurrent cost reductions have resulted in today's ubiquitous platforms and networks serving the personal application space. Indeed, personal applications have gone beyond the deskbound model of interacting with a computer to a model wherein computing and communication hardware are truly personal items, are highly mobile, and are integrated into the fabric of modem living. Consistent with this usage model for powerful personal computational and communication devices, many applications of "on-the-go" computing and communication have been, and are being, developed. One class of such on-the-go applications involves Near Field Communication (NFC) between devices. Applications such as conducting financial transactions with stores, banks, public transportation, and so on may be facilitated by the near-field coupling of two devices to exchange financial and/or personal information.

It is known that NFC-enabled devices may be operated to transmit and/or receive information amongst themselves by means of near-field coupling. Because information exchange between NFC devices only takes place over very short distances, there is an inherent level of anti-snooping security. This inherent secure communications characteristic makes NFC-enabled devices well-suited for use in connection with the aforementioned financial transactions with stores, banks, public transportation, and so on.

What is needed are methods, apparatuses and systems for facilitating multi-party transactions with static and/or dynamic rules management mediated by one or more NFC-enabled devices.

### BRIEF SUMMARY OF THE INVENTION

According to an aspect, an NFC-enabled computational platform comprises:
a computational resource;
an NFC communication module coupled to the computational resource; and
a memory coupled to the computational resource, the memory configured to store a plurality of accounts and a corresponding plurality of associated rule sets.

Advantageously, the computational platform is a mobile device.

Advantageously, each one of the plurality of rule sets is configured to specify one or more restrictions on the payout of value from the accounts with which it is associated.

Advantageously, an account associated with a rule set that contains the null set is an unrestricted account.

Advantageously, the NFC communication module and the computational resource are configured to:
receive value information and store the value information in an account region of the memory;
receive rule set information and store the rule set information in a rule set region of the memory;
receive an instruction to update a rule set;
determine that acceptance of the instruction to update is permitted; and
update the rule set.

Advantageously, the NFC communication module and the computational resource are further configured to:
communicate value information with restrictions on its use to a second NFC-enabled computational platform.

According to an aspect, a method is provided of conducting a multi-party transaction with dynamic rights management mediated by at least one NFC-enabled device, comprising:
receiving, by a first NFC-enabled device, first data representing a monetary value;
receiving, by the first NFC-enabled device, second data representing rules for the distribution of some or all of the monetary value;
receiving, by the first NFC-enabled device, third data representing an instruction to distribute a first portion of the monetary value;
transmitting, by the first NFC-enabled device, fourth data representing a second monetary value; and
transmitting, by the first NFC-enabled device, fifth data representing rules for distribution of some or all of the second monetary value.

Advantageously, the first NFC-enabled device is a mobile computational platform.

Advantageously, the mobile computational platform is a smart phone.

Advantageously, the method further comprises:
receiving, by the first NFC-enabled device, one or more instructions to modify the second data.

Advantageously, the method further comprises:
generating, by the NFC-enabled device, a notice to an authorized user that an instruction to modify the second data has been received.

Advantageously, the method further comprises:
determining whether the one or more instructions to modify the second data are from an authorized update requestor.

Advantageously, the method further comprises:
modifying the second data if the one or more instructions to modify the second data are from an authorized update requestor.

Advantageously, the method further comprises:
determining whether the instruction to distribute a first portion of the monetary value is permitted by the rules for the distribution of some or all of the monetary value.

According to an aspect, a method of operating an NFC-enabled device comprises:
receiving, by the NFC-enabled device, first data representing a credit value;
receiving, by the NFC-enabled device, second data representing rules for the distribution of some or all of the credit value;
receiving, by the NFC-enabled device, third data representing an instruction to distribute a first portion of the credit value;
transmitting, by the NFC-enabled device, fourth data representing a second credit value; and
transmitting, by the NFC-enabled device, fifth data representing rules for distribution of some or all of the second credit value;
wherein credit is an authorization for a third party to pay monetary value in connection with a transaction.

Advantageously, the first NFC-enabled device is a mobile computational platform.

Advantageously, the method further comprises:
receiving, by the first NFC-enabled device, one or more instructions to modify the second data.

Advantageously, the method further comprises:
determining whether the one or more instructions to modify the second data are from an authorized update requestor.

According to an aspect, a method of charitable giving comprises:
receiving and storing at a first NFC-enabled computational platform information representing a first monetary value;
receiving and storing at the first NFC-enabled computational platform information restricting the use of the monetary value;
communicating, between the first NFC-enabled computational platform, to a second NFC-enabled computational platform, information indicative of a second monetary value less than or equal to the first monetary value; and
communicating, between the first NFC-enabled computational platform, to a second NFC-enabled computational platform, information that restricts the distribution rights of the second monetary value.

Advantageously, the second monetary value represents a charitable donation.

According to an aspect, a method of operating an electronically accessible device comprises:
receiving, by the electronically accessible device, first data representing a first commercial value;
receiving, by the electronically accessible device, second data representing rules for the distribution of some or all of the first commercial value;
receiving, by the electronically accessible device, third data representing an instruction to distribute a first portion of the first commercial value; and
transmitting, by the electronically accessible device, fourth data representing a second commercial value;
wherein the second commercial value is within a range of values in accordance with the rules for the distribution of some or all of the commercial value.

Advantageously, the electronically accessible device is configured to receive first data, second data, and third data, by one or more of a wired communication interface, a wireless communication interface, a contact communication interface, a contactless communication interface, and a magnetic strip communication interface.

Advantageously, the first commercial value is a credit.

Advantageously, the first commercial value is a monetary value.

### BRIEF DESCRIPTION OF THE DRAWINGS

Various embodiments are described with reference to the accompanying drawings. In the drawings, like reference numbers indicate identical or functionally similar elements. Additionally, the left most digit(s) of a reference number identifies the drawing in which the reference number first appears.

Fig. 1 is a block diagram illustrating a near field communication (NFC) environment in accordance with the present disclosure.

Fig. 2 is a high-level block diagram illustrating an NFC-enabled device having both tag and reader functionality, the NFC-enabled device disposed adjacent a computational platform having NFC tag reader functionality.

Fig. 3 is a flow diagram of a method of in accordance with the present disclosure.

Fig. 4 is a block diagram illustrating various accounts and associated rule sets stored in a memory of an NFC-enabled mobile device.

Fig. 5 is a block diagram illustrating a three-party delegation operation.

Fig. 6 is a block diagram illustrating a three-party virtual delegation operation.

Fig. 7 is a flow diagram of a three-party virtual delegation operation.

### DETAILED DESCRIPTION

The following Detailed Description refers to accompanying drawings to illustrate exemplary embodiments consistent with the disclosure. References in the Detailed Description to "one exemplary embodiment," "an illustrative embodiment", "an exemplary embodiment," and so on, indicate that the exemplary embodiment described may include a particular feature, structure, or characteristic, but not every illustrative embodiment necessarily includes the particular feature, structure, or characteristic. Moreover, such phrases are not necessarily referring to the same embodiment. Further, when a particular feature, structure, or characteristic is described in connection with an embodiment, it is within the knowledge of those skilled in the relevant art(s) to affect such feature, structure, or characteristic in connection with other embodiments whether or not explicitly described.

The various embodiments of the present disclosure described herein are provided for illustrative purposes, and are not limiting. Other embodiments are possible, and modifications may be made to the illustrative embodiments within the spirit and scope of the invention. Therefore, the Detailed Description is not meant to limit the invention. Rather, the scope of the invention is defined only in accordance with the subjoined claims and their equivalents.

The following Detailed Description will so fully reveal the general nature of the invention that others can, by applying knowledge of those skilled in relevant art(s), readily modify and/or adapt for various applications such illustrative embodiments, without undue experimentation, without departing from the spirit and scope of the invention. It is to be understood that the phraseology or terminology herein is for the purpose of description and not of limitation, such that the terminology or phraseology of the present specification is to be interpreted by those skilled in relevant art(s) in light of the teachings herein.

Although the description of the present disclosure is provided in terms of NFC, those skilled in the relevant art(s) will recognize that the present disclosure may be applicable to other communications that use the near field and/or the far field without departing from the spirit and scope of the present disclosure. For example, although the present disclosure is described herein using NFC capable communication devices, those skilled in the relevant art(s) will recognize that functions of these NFC capable communication devices may be applicable to other communications devices that use the near field and/or the far field without departing from the spirit and scope of the present disclosure.

Terminology

As used herein, the expression "Near-field communicator" refers to a product that includes at least the resources to provide NFC tag and NFC tag reader functionality. Such products may be sometimes referred to as NFC-enabled devices.

Operating system refers generally to the software that, when executed by a computer or computational platform, schedules tasks, allocates storage, handles the interface to peripheral hardware and presents a default interface to the user when no application program is running.

As used herein, the term "transponder" refers to circuitry, including a transmitter and a receiver, such that a transponder may be used to transmit information responsive to receiving a query or other form of interrogation signal or communication. It is noted that a transponder may be implemented without any requirement of integration on a single die, and the present invention is not limited to any particular partitioning of transponder functionality amongst any particular number of components. In typical embodiments, transponders are formed on a single die.

The terms, chip, die, integrated circuit, semiconductor device, and microelectronic device, are often used interchangeably in the field of electronics. The present invention is applicable to all the above as these terms are generally understood in the field.

With respect to chips, it is common that power, ground, and various signals may be coupled between them and other circuit elements via physical, electrically conductive connections. Such a point of connection may be referred to as an input, output, input/output (I/O), terminal, line, pin, pad, port, interface, or similar variants and combinations. Although connections between and amongst chips are commonly made by way of electrical conductors, those skilled in the art will appreciate that chips and other circuit elements may alternatively be coupled by way of optical, mechanical, magnetic, electrostatic, and electromagnetic interfaces.

The term "smartcard" refers to a physical substrate, such as a credit card sized piece of plastic, having an integrated circuit embedded therein. Typically, smartcards are used for financial transactions or secure access to locked facilities. An active smartcard is one that includes an embedded power supply such as a battery. A passive smartcard is one that requires power to be supplied from an external source. In some instances, the external source is an energizing field from which the passive smartcard harvests the energy needed to carry out its desired function. For example, the energy required to operate the circuits of a passive smartcard can be obtained from the RF energy output from a nearby transmitter.

The expression "commercial value" refers to monetary value and credit.

The term "credit" refers to an data that is recognizable as an authorization for a third party to pay monetary value in connection with a transaction

The expression "electronically accessible device" refers to a device that is configured to receive and/or transmit data by one or more of a wired communication interface, a wireless communication interface, a contact communication interface, a contactless communication interface, and a magnetic strip communication interface.

Overview

Conventional physical money is characterized by denominations, that is by a value assigned to a particular piece of physical money. Other than a denomination of its value, the physical piece of money has no other monetary characteristics.

Various embodiments of the present disclosure provide a virtual money, in electronic form, with statically and/or dynamically programmable characteristics above and beyond value. In accordance with the present disclosure a computational platform, such as but not limited to an NFC-enabled mobile device, can receive and distribute virtual money. Statically programmable may also be referred to as one-time programmable.

Receiving virtual money, or an electronic token, or an electronic voucher, or any other electronic data or information that represents monetary value, typically, but not necessarily, takes place wirelessly. Receiving virtual money at the computational platform in accordance with the present disclosure typically occurs through an NFC interface of the computational platform. The virtual money may have one or more components. A first component of the virtual money is information that defines a monetary value. In the simplest case, the virtual money is an electronic form of cash, with no rules regarding its use or distribution. In typical embodiments of the present disclosure, the virtual money includes at least a second component, where the second component constitutes a rule set that defines how the value may be used. A third component of the virtual money of the present disclosure can be a tag, or a digital watermark. This third component is associated, integrated, or digitally intertwined with, some or all of the virtual money that is received at the computational platform. In this way, constraints on how the value is to be used after it leaves the computational platform can be maintained. In some embodiments, the computational platform stores multiple "accounts" and each account has an associated rule set.

By including the aforementioned constraints, typically in the form of rule sets, various embodiments provide a form of virtual delegation. Delegation may be described as a three-party transaction, with each party being a computational platform. Each of these computational platforms is typically, but not required to be, owned or controlled by and individual, company, organization, or government entity. A first party initiates a transaction with a second party that requires a transfer of funds to a second party to complete the transaction. However, in this three-party delegation process, the first party provides information necessary to generate a request to a third party, the request seeking transfer of funds to the second party to complete the transaction. The third party can grant or deny the request in this delegation process. Referring again to the virtual delegation enabled by embodiments in accordance with the present disclosure, the transaction can proceed between two parties without requiring the third party (i.e., the one normally delegated to decide whether to complete the transaction and provide the funds for an approved transaction). In virtual delegation embodiments the third party computational platform transfers virtual money with a corresponding rule set to a first party computational platform. When the first party computational platform initiates a transaction with the second party computational platform, a request does not have to be sent to a third party computational platform, but rather an evaluation of the initiated transaction under a rule set specified by the third party results in the completion or cancellation of the initiated transaction. In this way the third party exercises control over the financial transactions of the first party, but real-time communication of a request is eliminated.

With respect to alternative embodiments, it is noted that receiving virtual money, or an electronic token, or an electronic voucher, or any other electronic data or information that represents monetary value, can take place be way of wired connections. It is further noted that receiving virtual money at the computational platform in accordance with the present disclosure may occur through any suitable interface of the computational platform. In one illustrative embodiment, a user interaction with a software application running on a computational platform such as a personal computer can be used to set the rules for a particular unit of virtual money. It is noted that a user through interaction with software running a personal computer or other computational platform, can instruct that computer or platform to act as an issuer and transmit to an electronically accessible device a commercial value and a rule set associated with that commercial value. By way of example and not limitation, the electronically accessible device may be a smartphone, a smartcard, or any suitable computational platform that can store a commercial value and associated rule set, and respond to requests for transfer of commercial value in accordance with the rule set by means of any suitable communications interface regardless of whether that interface is wired, wireless, contact, contactless, magnetic strip, near-field communication, network, Internet, telephonic, and so on.

Various embodiments of the present disclosure provide the capability to receive instructions regarding changes to one or more rule sets, and to dynamically update the rule set associated with some or all of the stored value.

Further, various embodiments of the present disclosure provide the capability to engage in financial transactions. Depending on the rule set associated with an account, the financial transaction may be unrestricted, in which case the virtual money is simply cash in electronic form; or restricted, in which case the transaction cannot be completed unless it is in compliance with the specifications and constraints of the rule set.

In another aspect of the present disclosure, a holder of a unit of virtual money may request the issuer to initiate the process of changing the rule set associated with that virtual money, typically with requesting specific changes to the rule set. The issuer then has the option or granting or denying the request to initiate changes to the rule set. If the request is granted, then the issuer begins the rule change process.

In a still further aspect of the present disclosure, backward links are maintained such that when all or a portion of the virtual money is spent or transferred in accordance with its associated rule set, each issuer, or some portion of the issuers are notified of the transaction. The backward links may be in the form of Internet addresses, or telephone numbers. The present invention is not limited to any particular mechanism for retracing the chain of issuers and notifying some or all of them regarding a particular transaction.

Financial transactions in accordance with the present disclosure include the capability of transferring some value along with an associated rule set to a third party device. In this way, value that is paid out can still be restricted even in the hands of the third party recipient.

Illustrative Near Field Communications Environment

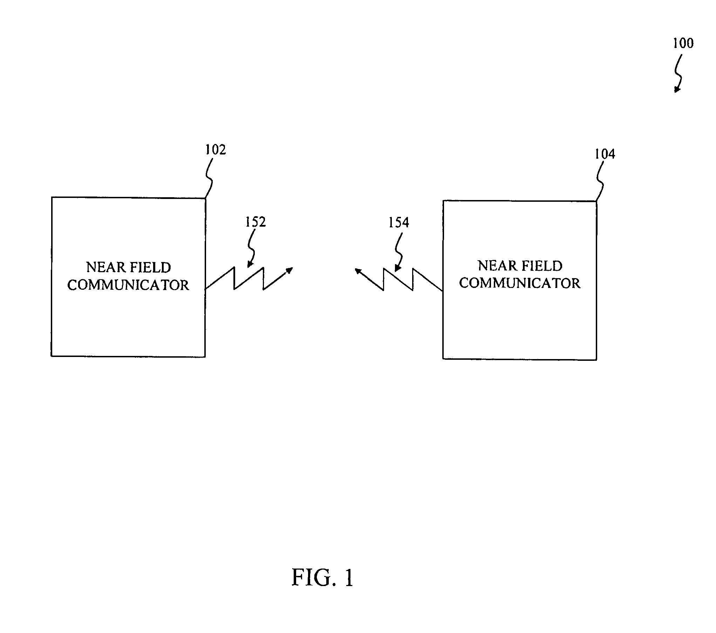

Fig. 1 is a block diagram showing an NFC environment in accordance with the present disclosure. An NFC environment **100** provides wireless communication of information among a first NFC device **102** and a second NFC device **104** that are sufficiently proximate to each other. The information may include one or more commands to be executed by first NFC device **102** and/or second NFC device **104,** data from one or more data storage devices that is to be transferred to first NFC device **102** and/or second NFC device **104,** or any combination thereof. The data storage devices may include one or more contactless transponders, one or more contactless tags, one or more contactless smartcards, any other machine-readable media that will be apparent to those skilled in the relevant art(s) without departing from the spirit and scope of the invention, or any combination thereof. Other machine-readable media may include non-transitory storage media, such as but not limited to, volatile memory, e.g., random access memory (RAM); non-volatile memory, e.g., read only memory (ROM), flash memory, magnetic disk storage media, and optical storage media. Still other machine readable media may include electrical, optical, acoustical or other forms of propagated signals such as carrier waves, infrared signals, and digital signals, to provide some examples.

As mentioned above, improvements in manufacturing technologies and digital architecture have resulted in a number of products and product categories that were not previously possible or practical to implement. The emerging developments in the area of Near Field Communication (NFC) circuits, systems and applications is making new products and product categories possible. Products incorporating Near-Field Communication capabilities are sometimes referred to as NFC-enabled. For example, mobile phones, smart cards, key fobs, secure access cards, tablet computers, or other electronic products that include NFC capabilities are referred to herein as NFC-enabled. Near-field communication allows data to be communicated from a first NFC-enabled device to a second NFC-enabled device over short distances. Although a strict definition for the range of short distances is not agreed upon in the field, short range for NFC usually is thought of as being less than 4 cm, or within one wavelength of the selected communication frequency, typically 13.56 MHz.

NFC-Enabled Devices

Typical NFC arrangements involve a pair of devices in which a first device acts as a target or "tag" to respond to a communication and a second device within a near-field coupling distance of the first device acts as a "reader" to initiate the communication. In various embodiments of the present disclosure the first device may be equipped with the circuitry for acting as both a tag and a reader, commonly referred to as a communicator. Electronic products that include NFC tag circuitry along with circuitry for other functionality may be referred to as tag emulators, or to have the capability of operating in "tag emulation mode". Similarly, electronic products that include NFC reader circuitry along with circuitry for other functionality may be referred to as reader emulators, or to have the capability of operating in "reader emulation mode".

As will be described in greater detail below, NFC-enabled devices and applications have utility in at least consumer electronics and industrial products.

In connection with the following illustrative embodiments, it is noted that any reference to a computational platform is intended to include similar computational devices and computers regardless of their form factor or input/output configuration. By way of example, and not limitation, a smartphone is a computational platform.

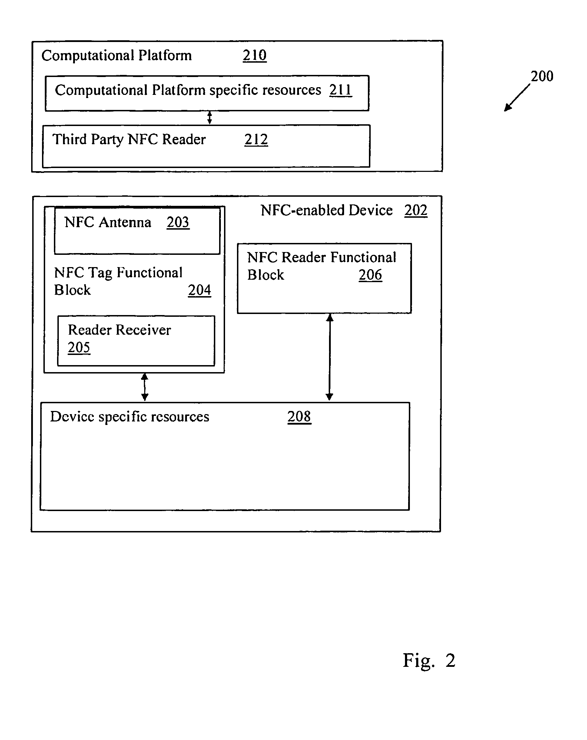

Fig. 2 shows a high-level block diagram of a near-field communication arrangement **200** that includes a NFC-enabled device **202** having both tag **204** and reader **206** functional blocks, the NFC-enabled device **202** being disposed adjacent to a second NFC-enabled device such as a computational platform **210** having NFC tag reader **212** functionality. The circuitry block that implements NFC Tag **204** includes an NFC antenna **203** and a reader receiver **205.** NFC-enabled device **202** further includes device specific resources **208.** In typical embodiments, device specific resources **208** are coupled to both the NFC Tag **204** and the NFC reader **206.**

Since almost any electronic product may be provided with NFC capabilities, NFC-enabled devices may include, but are not limited to, computational platforms, smart cards, smart phones, mobile phones, secure access cards, bus and train payment cards, key fobs, utility meters, sensors, and so on. Device specific resources **208** may include a wide variety of hardware, and may further include software (i.e., stored program code). Stored program code, when executed, may implement an operating system and/or application programs for the NFC-enabled device 202. Stored program code is typically stored in memory devices disposed within NFC-enabled device 202. Such memory devices may be implemented with any suitable type of memory circuitry. Those skilled in the art will recognize that memory may be implemented as addressable regions within a single memory chip, or addressable regions of several different memory chips. In typical embodiments, at least a portion of the memory includes non-volatile memories. Non-volatile memories have the characteristic of retaining the contents stored therein even when no power is applied to those memories. There are a number of types of non-volatile memory including, but not limited to, flash memory, Read Only Memory (ROM), one-time programmable memory, fuse programmable memory, anti-fuse programmable memory, laser programmable memory, electrically alterable read only memory, and so on. In typical embodiments, at least a portion of the memory in the NFC-enabled device is a non-volatile memory that can be repeatedly written to, as well as read from.

In some embodiments, device specific resources **208** include one or more programmable configuration registers. By way of example, and not limitation, if NFC-enabled device **202** is a smart phone, then device specific resources **208** may include, among other resources, one or more cellular telephone radios, a Bluetooth radio, a GPS radio, a Wi-Fi radio, a microprocessor, a graphics processor, volatile and non-volatile memory, stored program code, one or more accelerometers and gyroscopes, one or more digital cameras, a display screen, a display screen controller, audio inputs and outputs, and so on. In typical embodiments, NFC Tag **204** and NFC Reader 206 are communicatively coupled to one or more of the device specific resources **208.**

Still referring to Fig. 2, near-field communication arrangement **200** further includes a computational platform **210.** Computational platform **210** includes computational platform specific resources **211** and an NFC reader **212.** It is noted that in various embodiments, NFC tag reader **212** may be a reader/writer. An NFC reader/writer is a functional block that, in addition to receiving data from an NFC tag, can also write data to the tag.

It will be appreciated that NFC-enabled devices in accordance with the present disclosure may be active or passive. Active devices have access to a power supply such as a battery or other DC power supply (e.g., an AC adaptor). Passive devices are those which need to harvest energy from an external source, such as, but not limited to, from an external field.

Illustrative Applications

Various embodiments of the present disclosure provide a powerful programmable mechanism, mediated by an NFC-enabled computational platform, that controls the use and distribution of monetary value received by, and stored within, the NFC-enabled computational platform. It is noted that alternative embodiments may be constructed with computational platforms that are not NFC-enabled, but that rely on any other suitable means of communicating information.

It is known that an NFC-enabled computational platform such as a smart phone, may be authorized to contain a variety of financial information that can be used to make payments in accordance with one or more payment methods. This information, referred to herein as virtual money, can be used for various electronically performed financial transactions such as the purchase of tickets (e.g., movies, sporting events), for access to public transportation (e.g., trains, busses, streetcars, trams), for access to transportation infrastructure (e.g., parking, bridge, tunnel and highway tolls), or for purchase of various necessities (e.g., food, clothing, medical supplies, shelter). It is noted that while some financial information represents monetary value and may be treated as virtual money, other financial information may represent a digital coupon or certificate to be used as a discount when purchasing a particular item.

Various embodiments of the present disclosure provide capabilities related to static and/or dynamic rules management. As used herein, static and/or dynamic rules management refers to assigning or associating a rule set to a particular monetary value or discount contract (i.e., a coupon). For example, when an issuer, such as a bank, a payment institution or a business, issues financial information to an NFC-enabled mobile device, it can, in accordance with the present disclosure, associate a rule set that governs the use of that financial information. In some embodiments, the rule set and the financial information are stored within the NFC-enabled mobile device. In some of these embodiments the financial information and associated rule set have no further updates from the issuer. That is, the rule set remains the same and the value may be reduced as it is spent or otherwise transferred out of the NFC-enabled mobile device. This is an example of a static rule set. However, in other embodiments, the NFC-enabled mobile device may receive, from the issuer or an entity authorized by the issuer, instructions to update the rule set. The instructions may be received via the NFC interface of the mobile device, or via any other communications interface through which the mobile device is capable of receiving such instructions. Instructions to update one or more rule sets may include, but are not limited to, modifications to, or revocation of, the rule set.

In other embodiments, the financial information and a link to the rule set are stored within the NFC-enabled mobile device. This link can be used to tie the financial information to its associated rules and constraints, as defined by the remotely maintained rule set. In this way, the issuer can dynamically update the rule set associated with the financial information, thereby adjusting or revoking the rules and constraints.

Various embodiments of the present disclosure provide a way for value to be electronically transferred, for example in the form of an electronic token, wherein the transferor may create restrictions and/or incentives on the use of the value transferred via electronic token ("token"). The totality of restrictions and/or incentives received from the transferor are again referred to as a rule set. In such embodiments of the present disclosure, the aforementioned token along with the rule set may be received from the transferring entity by an NFC-enabled device. The rule set may be applied such that the NFC-enabled device may only be enabled for pre-defined transactions or classes of transactions.

Associating a rule set with a monetary value in accordance with the present disclosure provides a powerful programmable mechanism for controlling the time and manner in which the value transferred to the NFC-enabled is consumed. Illustrative rules that can be applied in accordance with the present disclosure can specify an set of logical conditions, and may include, but are not limited to, one or more of:

a) a fixed maximum amount of virtual money that can be used per transaction;

b) a dynamically determined amount of virtual money that can be used per transaction;

c) a fixed maximum amount of virtual money that can be used per transaction type;

d) a dynamically determined amount of virtual money that can be used per transaction type;

e) a fixed maximum amount of virtual money that can be used within any time period;

f) a dynamically determined amount of virtual money that can be used within any time period;

g) a list of authorized entities with which a purchase can be made;

h) a list of authorized entities to which a donation can be made;

i) for entities from (h) above, a list of funds, or causes, for which donation can be used;

j) a list of authorized entities to which payments can be made;

k) a list of authorized entities to which deposits can be made;

l) what amounts, if any, may be transferred to another NFC-enabled device;

m) what amounts, if any, may be transferred to another device with a specified interface;

n) the identity of devices to which amounts may be transferred;

o) the rate at which an associated value decreases;

p) the time at which an associated value expires;

q) the current time and location of when a transaction is attempted; and

r) sharing rights (i.e., copying coupons as opposed to transferring monetary value).

In connection with the foregoing illustrative list of rules, it is noted that those that are determined dynamically are themselves determined through further dynamically updateable rules. By way of example, and not limitation, a dynamically determined amount of virtual money may be determined based on the logical evaluation of how much value is left in an account, how much has been spent within a given timeframe, how long until the account will be replenished (if it is an account into which value is regularly deposited), the past and current geographical location of the NFC-enabled mobile device, the entities with which purchases have been made, the entities to which donations have been made, and the amounts that have been transferred to other devices. Such determinations are typically accomplished through the action of logic circuitry and/or the execution of software instructions by computer hardware within the NFC-enabled mobile device in which the financial information is stored.

In some alternative embodiments, rule sets may be locked. That is, locked rule sets are not subject to dynamic rule changes. In other alternative embodiments, rule set changes cannot be made without first asking for permission to update a rule set. Permission may be granted to the requestor of the rule set update either: (1) in accordance with a predetermined algorithm governing acceptance or rejection of requests to update existing rule sets, the algorithm processed by computational resources of the NFC-enabled mobile device; or (2) by an authorized user of the NFC-enabled mobile device operating one or more user input interfaces of that mobile device. An algorithm governing acceptance or rejection of rule set update requests can include, but is not limited to, determining, by the NFC-enabled mobile device, whether the request comes from an authorized entity such as the issuer of the original rule set.

In some embodiments, rule set updates generate a concurrent notice to the authorized user at one or more user perceivable outputs of the NFC-enabled mobile device. Such notices may additionally, or alternatively, be sent to one or more designated parties by device independent communication means, such as but not limited to, e-mail. These notices can be sent directly by the update requestor, or by the NFC-enabled mobile device that was the subject of the rule set update.

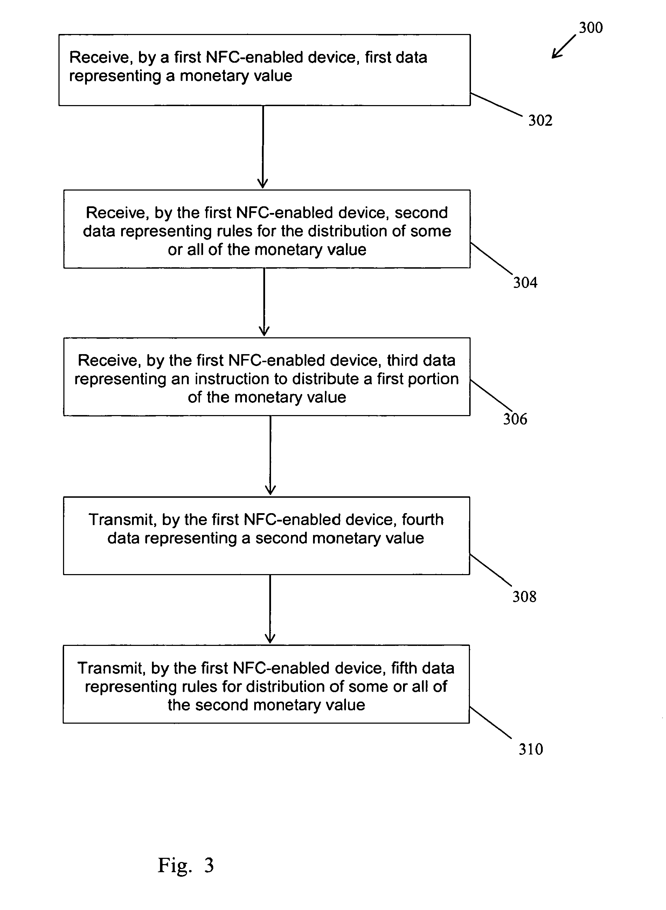

Fig. 3 shows the process flow of one illustrative embodiment of the present disclosure wherein a method **300** of conducting a multi-party transaction with dynamic rights management mediated by at least one NFC-enabled device, includes receiving **302,** by a first NFC-enabled device, first data representing a monetary value; receiving **304,** by the first NFC-enabled device, second data representing rules for the distribution, or pay out, of some or all of the monetary value; receiving **306,** by the first NFC-enabled device, third data representing an instruction to distribute, or pay out, a first portion of the monetary value; transmitting **308,** by the first NFC-enabled device, fourth data representing a second monetary value; and transmitting **310,** by the first NFC-enabled device, fifth data representing rules for distribution, or pay out, of some or all of the second monetary value.

Still referring to the illustrative embodiment of Fig. 3, the monetary value, i.e., financial information, is typically received from an issuer such as, but not limited to a bank. Likewise, rules for the distribution, or pay out, of value are received from the issuer. An instruction to pay out a portion of the value, can be communicated to the NFC-enabled device by another NFC-enabled device. Alternatively, an instruction to pay out a portion of the value can be communicated to the NFC-enabled device by a user that activates one or more input interfaces of the NFC-enabled device (e.g., voice command interface, touch screen command interface, keyboard command interface). In some transactions, a transfer of value from an account to another entity includes the information specifying rules for use of the value by the receiving entity.

In an alternative embodiment, rather than receiving and transmitting data representing monetary values, the data represents credit values, wherein credit is an authorization for a third party to pay monetary value in connection with a transaction.

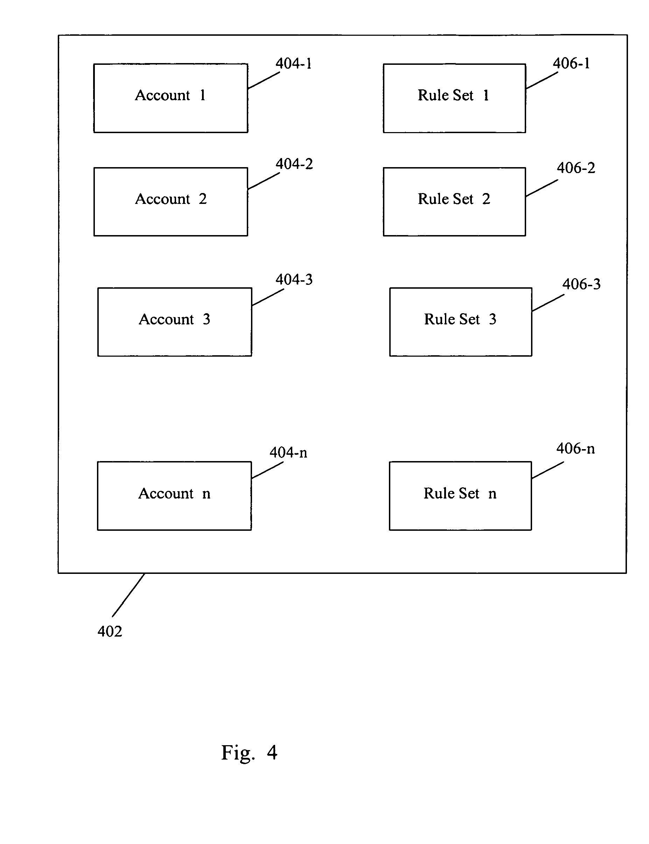

Fig. 4 shows a block diagram of a portion of an illustrative NFC-enabled mobile device in accordance with the present disclosure having a memory **402** disposed therein, and a plurality of accounts **404-1, 404-2, 404-3, ... 404-n,** and a plurality of respectively associated rule sets **406-1, 406-2, 406-3, ... 406-n,** stored within memory **402.** In typical embodiments memory **402** is a non-volatile memory, such as a flash memory. It is noted that are a variety of memory technologies each using different circuits and/or materials, and it is further noted that the present invention is not limited to any particular kind of memory device or technology.

Accounts **404-1, 404-2, 404-3, ... 404-n,** represent portions of memory **402** in which a corresponding plurality of sets of financial information representing value are stored. Each account is associated with a corresponding rule set **406-1, 406-2, 406-3,** ... **406-n,** which are also stored in memory **402.** A rule set can be empty (the null set) and this indicates that the value specified in the associated account is unrestricted. The value in an unrestricted account can used at any time for any purpose without any restrictions.

In an alternative embodiment, each account includes a pointer that identifies a particular rule set. In this way, a programmable relationship between an account and associated rule sets may be established. Multiple accounts may be associated with a single rule set.

In a further alternative embodiment, a method of charitable giving, includes receiving and storing at a first NFC-enabled computational platform information representing a first monetary value; receiving and storing at the first NFC-enabled computational platform information restricting the use of the monetary value; communicating, between the first NFC-enabled computational platform and a second NFC-enabled computational platform, information indicative of a second monetary value less than or equal to the first monetary value; and communicating, between the first NFC-enabled computational platform and the second NFC-enabled computational platform, information that restricts the distribution rights of the second monetary value. In this way, charitable givers have confidence that the value of their contributions is used for specific purposes, and not for general use.

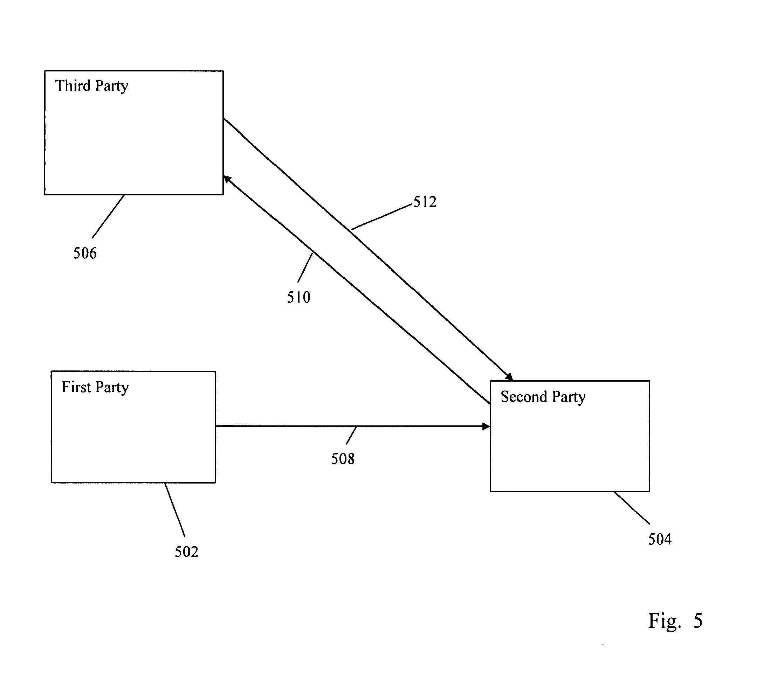

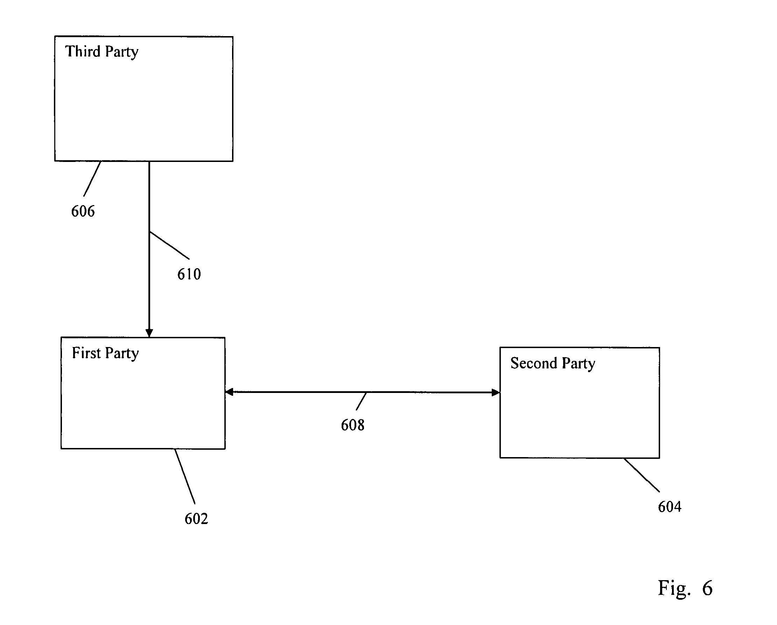

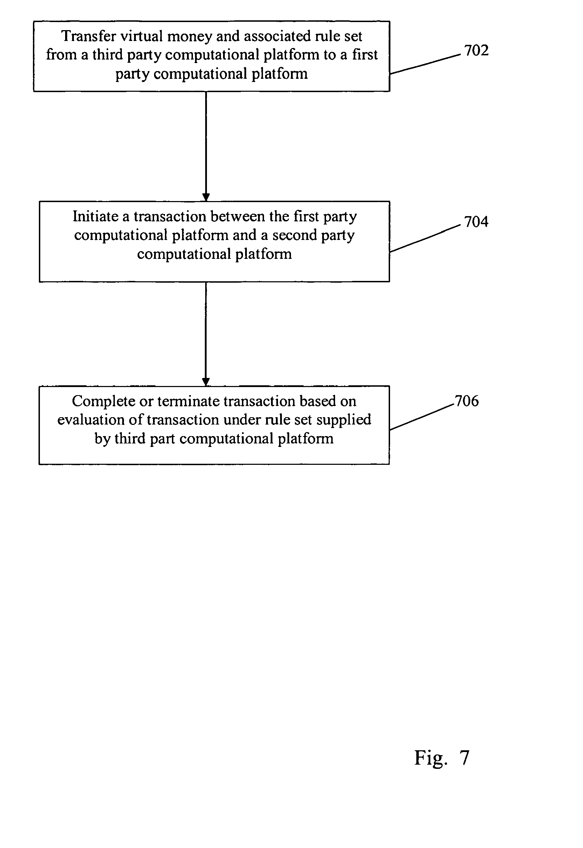

Figs. 5-7 relate to delegation transactions. Fig. 5 is a block diagram illustrating a three-party delegation operation, Fig. 6 is a block diagram illustrating a three-party virtual delegation operation, and Fig. 7 is a flow diagram of a three-party virtual delegation operation.

Referring to Fig. 5, it can be seen that three sequential communications are performed in order to complete a transaction. A first party computational platform **502** initiates a transaction with a second party computational platform **504** with a communication **508.** Second party computational platform **504** requests authorization and/or funds transfer from a third party computational platform **506** with a communication **510.** Third party computational platform **506** responds with a communication **512** which may decline to complete transaction, or provide the authorization and/or funds transfer to complete the transaction.

Fig. 6 illustrates an exemplary virtual delegation transaction in accordance with the present disclosure. A third party computational platform **606** communicates information to a first party computational platform **602** by way of a communication **610.** This information includes, but is not limited to, virtual money having an associated rule set. First party computational platform **602** communicates with a second party computational platform **604** by way of communication **608.** First party computational platform, based at least in part on the rule set received from third party computational platform in communication **610,** determines whether the transaction is allowable under the third party rule set. If it is then the transaction is completed and virtual money may be transferred to second party computational platform **604.** In this way the third party still controls what can and cannot be done with the virtual money stored in first party computational platform **602.**

In one illustrative embodiment, first party computational platform **602** is a smartphone, second computational platform **604** is a point-of-sale terminal, and third party computational platform **606** is a personal computer. Communications **608** and **610** are typically wireless but the present invention is not limited to wireless communication.

Fig. 7 shows an exemplary process in accordance with the present disclosure in which a three-party virtual delegation transaction takes place. In a first step **702,** virtual money and an associated rule set are transferred from a third party computational platform to a first party computational platform. In a second step **704,** a transaction between the first party computational platform and a second party computational platform is initiated. In a step **706,** the transaction is completed or terminated based, at least in part, on evaluation of the transaction under the rule set supplied by the third part computational platform.

### Conclusion

It is to be appreciated that the Detailed Description section, and not the Abstract of the Disclosure, is intended to be used to interpret the claims. The Abstract of the Disclosure may set forth one or more, but not all, exemplary embodiments of the invention, and thus, is not intended to limit the invention and the subjoined claims in any way.

The invention has been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

It will be apparent to those skilled in the relevant art(s) that various changes in form and detail can be made therein without departing from the spirit and scope of the invention. Thus the invention should not be limited by any of the above-described exemplary embodiments, but should be defined only in accordance with the subjoined claims and their equivalents.

## Claims

1. An NFC-enabled computational platform, comprising:
a computational resource;
an NFC communication module coupled to the computational resource; and
a memory coupled to the computational resource, the memory configured to store a plurality of accounts and a corresponding plurality of associated rule sets.

2. The NFC-enabled computational platform of Claim 1, wherein the computational platform is a mobile device.

3. The NFC-enabled computational platform of Claim 1, wherein each one of the plurality of rule sets is configured to specify one or more restrictions on the payout of value from the accounts with which it is associated.

4. The NFC-enabled computational platform of Claim 1, wherein an account associated with a rule set that contains the null set is an unrestricted account.

5. The NFC-enabled computational platform of Claim 1, wherein the NFC communication module and the computational resource are configured to:
receive value information and store the value information in an account region of the memory;
receive rule set information and store the rule set information in a rule set region of the memory;
receive an instruction to update a rule set;
determine that acceptance of the instruction to update is permitted; and
update the rule set.

6. The NFC-enabled computational platform of Claim 5, wherein the NFC communication module and the computational resource are further configured to:
communicate value information with restrictions on its use to a second NFC-enabled computational platform.

7. A method of conducting a multi-party transaction with dynamic rights management mediated by at least one NFC-enabled device, comprising:
receiving, by a first NFC-enabled device, first data representing a monetary value;
receiving, by the first NFC-enabled device, second data representing rules for the distribution of some or all of the monetary value;
receiving, by the first NFC-enabled device, third data representing an instruction to distribute a first portion of the monetary value;
transmitting, by the first NFC-enabled device, fourth data representing a second monetary value; and
transmitting, by the first NFC-enabled device, fifth data representing rules for distribution of some or all of the second monetary value.

8. The method of Claim 7, wherein the first NFC-enabled device is a mobile computational platform.

9. The method of Claim 7, wherein the mobile computational platform is a smart phone.

10. The method of Claim 7, further comprising:
receiving, by the first NFC-enabled device, one or more instructions to modify the second data.

11. The method of Claim 10, further comprising:
generating, by the NFC-enabled device, a notice to an authorized user that an instruction to modify the second data has been received.

12. The method of Claim 10, further comprising:
determining whether the one or more instructions to modify the second data are from an authorized update requestor.

13. A method of operating an NFC-enabled device, comprising:
receiving, by the NFC-enabled device, first data representing a credit value;
receiving, by the NFC-enabled device, second data representing rules for the distribution of some or all of the credit value;
receiving, by the NFC-enabled device, third data representing an instruction to distribute a first portion of the credit value;
transmitting, by the NFC-enabled device, fourth data representing a second credit value; and
transmitting, by the NFC-enabled device, fifth data representing rules for distribution of some or all of the second credit value;
wherein credit is an authorization for a third party to pay monetary value in connection with a transaction.

14. A method of charitable giving, comprising:
receiving and storing at a first NFC-enabled computational platform information representing a first monetary value;
receiving and storing at the first NFC-enabled computational platform information restricting the use of the monetary value;
communicating, between the first NFC-enabled computational platform, to a second NFC-enabled computational platform, information indicative of a second monetary value less than or equal to the first monetary value; and
communicating, between the first NFC-enabled computational platform, to a second NFC-enabled computational platform, information that restricts the distribution rights of the second monetary value.

15. A method of operating an electronically accessible device, comprising:
receiving, by the electronically accessible device, first data representing a first commercial value;
receiving, by the electronically accessible device, second data representing rules for the distribution of some or all of the first commercial value;
receiving, by the electronically accessible device, third data representing an instruction to distribute a first portion of the first commercial value; and
transmitting, by the electronically accessible device, fourth data representing a second commercial value;
wherein the second commercial value is within a range of values in accordance with the rules for the distribution of some or all of the commercial value.
